# EUROPÄISCHE PATENTSCHRIFT

(11) **EP 3 741 799 B1**
(45) Veröffentlichungstag und Bekanntmachung des Hinweises auf die Patenterteilung: **28.12.2022**
(21) Anmeldenummer: 19175581.8
(22) Anmeldetag: 21.05.2019
(51) Int. Cl.: C08J 9/00, C08J 9/08

(54) **VERFAHREN ZUR HERSTELLUNG EINES POLYMERSCHAUMES**
METHOD FOR PRODUCING A POLYMER FOAM
PROCÉDÉ DE FABRICATION D'UNE MOUSSE EN POLYMÈRE

(43) Veröffentlichungstag der Anmeldung: 25.11.2020
(73) Patentinhaber: Nabaltec AG, 92421 Schwandorf (DE)
(72) Erfinder: WERNE, Lisa, 64295 Darmstadt (DE); NEUMEISTER, Corina, 92318 Neumarkt i. d. Opf. (DE); METSCH-ZILLIGEN, Elke, 54597 Steffeln (DE); PFAENDNER, Rudolf, 64668 Rimbach (DE); SAUERWEIN, Reiner, 92449 Steinberg (DE)
(74) Vertreter: Büchel, Edwin

(56) Entgegenhaltungen:
- CN-B- 101 376 744
- US-A1- 2017 275 436
- US-A1- 2018 105 751

## Beschreibung

Die vorliegende Erfindung betrifft Verfahren zum Herstellen eines Polymerschaumes durch Erhitzen einer Zusammensetzung enthaltend mindestens ein Treibmittel, mindestens ein erstes Polymer und mindestens ein zweites Polymer auf eine Temperatur, die eine Abspaltung von Wasser aus dem mindestens einen Treibmittel zur Schaumbildung ermöglicht, wobei das mindestens eine Treibmittel ein Hydrotalcit ist und wobei das mindestens zweite Polymer verschieden von dem ersten Polymer ist, das mindestens zweite Polymer die Schaumbildung unterstützt und ein Säureanhydrid-Homopolymer oder ein Copolymer aus mindestens einem Säureanhydrid-Monomer und mindestens einem weiteren Monomer ist, wobei das Säureanhydrid als Monomereneinheit im zweiten Polymer nicht durch Aufpropfen eingeführt ist.

Die Erfindung betrifft weiterhin solche Zusammensetzungen, derart hergestellte Polymerschäume und die Verwendung von Hydrotalciten als Treibmittel zur Schaumbildung. Geschäumte Kunststoffe oder Schaumstoffe sind ein Weg zur Herstellung von leichten Materialien, um Leichtbaustrukturen zu gestalten und um Energie durch Gewichtsreduktion einzusparen. Moderne Kunststoffschäume wie sie z.B. im Automobilbau eingesetzt werden, zeichnen sich durch hohe mechanische Festigkeiten bei geringem Gewicht, sehr gute Dämpfungseigenschaften (Akustik, Wärmedämmung), niedrige Wärmeleitfähigkeiten und eine gute Bearbeitbarkeit aus. Kunststoffschäume bestehen definitionsgemäß aus einer festen Polymerphase und einer Gasphase in Form von Zellen ("Polymerschaum"). Die Zellstrukturen können dabei geschlossen (häufig bei harten Schäumen) oder offen (vorzugsweise bei weichen Schäumen) vorliegen. Für die Herstellung von Polymerschäumen gibt es mehrere industrielle Herstellungsmethoden: Formpressverfahren, Gießverfahren, Extrusionsschäumen, Integralschäumen im Spritzgießprozess und Partikelschäumen. Bei der Herstellung der Schäume wird die Gasphase in der Regel durch physikalische oder chemische Treibmittel erzeugt. Physikalische Treibmittel sind z.B. übliche Gase wie Stickstoff, Kohlendioxid oder niedrig siedende Kohlenwasserstoffe. Chemische Treibmittel sind Substanzen, die zumeist bei erhöhten Temperaturen im Verarbeitungsprozess unter Zersetzung Gase bilden wie z.B. Azo- oder Hydrazinverbindungen. Viele der chemischen Treibmittel, die vorteilhaft als Additive auf einfachem Weg in das Polymer eingebracht werden können, sind heute jedoch aus Gründen der Toxizität bedenklich. Es werden daher Verfahren gesucht, die die Herstellung von Schäumen mit unbedenklichen chemischen Treibmitteln erlauben.

Grundsätzlich gibt es kommerziell diverse chemische Treibmittel zur Herstellung von Kunststoffschäumen. Diese chemischen Treibmittel weisen unterschiedliche Zersetzungstemperaturen auf, wodurch sich dann auch die möglichen Polymeranwendungen in Abhängigkeit von den jeweiligen Verarbeitungstemperaturen definieren. Die bekanntesten Treibmittel sind auf organischer Basis wie Azoverbindungen z.B. Azodicarbonamid, wobei N₂ und CO₂ entstehen (Zersetzung bei 205-215 °C), Hydrazide wie Trihydrazinotriazin (Zersetzung bei 275 °C, Bildung von N₂ und NH₃) oder Tetrazole wie z.B. 5-Phenyltetrazol (Zersetzung 240-280 °C, Bildung von N₂). Ein Beispiel für anorganische Verbindungen ist das System Zitronensäure / Natriumhydrogencarbonat, das sich bei 150-200 °C zersetzt.

CN 104231302 A beschreibt ein Schaummittel, insbesondere ein Schaummittel vom Verbundtyp für ein Hart-PVC-Material mit geringem Schaum, mit 20 bis 40 Teilen Azodicarbonamid, 30 bis 40 Teilen eines Schäumhilfsmittels, 2 bis 5 Teilen eines Dispergiermittels und mit 1 bis 5 Teilen eines Verarbeitungsmittels, wobei das Schäumhilfsmittel Disulfohydrazid, Polyethylenglykol oder Zinkchlorid ist.

CN 106317445 A beschreibt ein geträgertes kristallines Hydratschäummittel sowie ein Herstellungsverfahren und Anwendungen davon. Das Schäummittel umfasst einen Träger und Salzhydratkristalle, die auf der Oberfläche des Trägers getragen werden. Hierbei werden kristalline Salze oder Hydrate kristalliner Salze in Wasser aufgelöst und ein Träger zugegeben. Nach Erhitzen wird ein aufschlämmungsähnliches Produkt erhalten, das nach Trocknen, Mahlen und Sieben als Additiv zur Herstellung eines Polymerschaumstoffs verwendet werden kann.

Eine Aufgabe der vorliegenden Erfindung ist es ein Verfahren zum Herstellen eines Polymerschaumes mit einem unbedenklichen Treibmittel sowie daraus hergestellte Polymerschäume zur Verfügung zu stellen. Hierbei soll ein möglichst einfaches Verfahren zum Herstellen eines Polymerschaumes bereitgestellt werden.

Die Aufgabe wird durch ein Verfahren zum Herstellen eines Polymerschaumes gelöst, den Schritt enthaltend
- Erhitzen einer Zusammensetzung enthaltend mindestens ein Treibmittel, mindestens ein erstes Polymer und mindestens ein zweites Polymer auf eine Temperatur, die eine Abspaltung von Wasser aus dem mindestens einen Treibmittel zur Schaumbildung ermöglicht,
wobei das mindestens eine Treibmittel ein Hydrotalcit der allgemeinen Formel (I)

M²⁺₁₋ₓAlₓ(OH)₂ (Aⁿ⁻)_{x/n} * d H₂O (I)

ist und wobei M²⁺ als Kation eines oder mehrere der Metalle aus der Gruppe Mg, Ca, Sr, Zn oder Sn, 0 < x < 0,5, d eine Zahl von < 0 bis 20, Aⁿ ein Anion ausgewählt aus OH⁻, ClO₄⁻, HCO₃⁻, CH₃COO⁻, C₆H₅COO⁻, CO₃²⁻, (CHOHCOO)₂²⁻, (CH₂COO)₂²⁻, CH₃CHOHCOO⁻, HPO₃⁻ oder HPO₄²⁻ und n die Ladung des Anions ist und
wobei das mindestens zweite Polymer verschieden von dem ersten Polymer ist, das mindestens zweite Polymer die Schaumbildung unterstützt und ein Säureanhydrid-Homopolymer oder ein Copolymer aus mindestens einem Säureanhydrid-Monomer und mindestens einem weiteren Monomer ist, wobei das Säureanhydrid als Monomereneinheit im zweiten Polymer nicht durch Aufpropfen eingeführt ist.

Ein weiterer Aspekt der vorliegenden Erfindung betrifft weiterhin eine solche Zusammensetzung.

Ein weiterer Aspekt der vorliegenden Erfindung ist ein Polymerschaum erhältlich durch das erfindungsgemäße Verfahren.

Ein weiterer Aspekt der vorliegenden Erfindung ist die Verwendung eines Hydrotalcits wie hierin angegeben als Treibmittel zur Herstellung eines Polymerschaumes. Vorzugsweise betrifft die Verwendung zur Herstellung eines Polymerschaumes eine Zusammensetzung enthaltend mindestens das Hydrotalcit als Treibmittel und mindestens ein Polymer, wobei das Polymer die Schaumbildung unterstützt und ein Säureanhydrid-Homopolymer oder ein Copolymer aus mindestens einem Säureanhydrid-Monomer und mindestens einem weiteren Monomer ist. Insbesondere betrifft die Verwendung zur Herstellung eines Polymerschaumes die erfindungsgemäße Zusammensetzung enthaltend das mindestens eine Treibmittel, das mindestens eine erste Polymer und das mindestens eine zweite Polymer. Überraschenderweise zeigen wasserhaltige Calciumhydrotalcite wie hierin angegeben die Fähigkeit als effiziente Treibmittel für die Herstellung von Kunststoffschäumen zu wirken, sofern ein säureanhydridhaltiges Polymer während des Schäumprozesses anwesend ist. Hierbei ist es nicht erforderlich und aufgrund der aufwändigen Herstellung auch nachteilig, dass das Hydrotalcit in geträgerter Form vorliegt. Überraschenderweise hat sich ebenfalls ergeben, dass das Säureanhydrid als Monomereneinheit im mindestens zweiten Polymer auftritt und nicht durch Aufpfropfen an eine andere Monomereneinheit in das mindestens zweite Polymer eingeführt ist um einen ausreichenden Effekt zu erzielen.

Die erfindungsgemäße Zusammensetzung zum Herstellen eines Polymerschaumes nach der vorliegenden Erfindung enthält mindestens drei Bestandteile, nämlich (a) mindestens ein Treibmittel, (b) mindestens ein erstes Polymer und (c) mindestens ein zweites Polymer.

Demzufolge enthält die erfindungsgemäße Zusammensetzung ein oder mehrere, wie zwei, drei oder vier, unterschiedliche Treibmittel (a). Vorzugsweise enthält die Zusammensetzung jedoch nur ein Treibmittel. Sofern mehr als ein Treibmittel in der Zusammensetzung enthalten ist, ist mindestens ein Treibmittel gemäß Formel (I) vorhanden. Die weiteren von dem mindestens einen Treibmittel verschiedenen Treibmittel können ebenfalls der Formel (I) genügen oder nicht. Sofern diese der Formel (I) genügen, sind hierin angegebene Anteile des Treibmittels auf sämtliche unter die Formel (I) fallende Verbindungen zu beziehen.

Ohne an eine Theorie gebunden zu sein, wird davon ausgegangen, dass das mindestens eine Treibmittel die Schaumbildung zumindest durch Abspaltung von Wasser ermöglicht. Es ist jedoch auch die Abspaltung anderer Gase möglich. Insbesondere bei Einsatz mehrerer Treibmittel muss nicht ausschließlich durch Abspaltung von Wasser die Schaumbildung ermöglicht werden. Es ist jedoch bevorzugt, wenn ausschließlich durch Abspaltung von Wasser die Schaumbildung ermöglicht wird.

Bei dem mindestens einen Treibmittel handelt es sich um ein Hydrotalcit der allgemeinen Formel (I)

M²⁺₁₋ₓAlₓ(OH)₂ (Aⁿ⁻)_{x/n} * d H₂O (I),

wobei M²⁺ als Kation eines oder mehrere der Metalle aus der Gruppe Mg, Ca, Sr, Zn oder Sn, 0 < x < 0,5, d eine Zahl von < 0 bis 20, Aⁿ ein Anion ausgewählt aus OH⁻, ClO₄⁻, HCO₃⁻, CH₃COO⁻, C₆H₅COO⁻, CO₃²⁻, (CHOHCOO)₂²⁻, (CH₂COO)₂²⁻, CH₃CHOHCOO⁻, HPO₃⁻ oder HPO₄²⁻ und n die Ladung des Anions ist.

Hydrotalcite sind im Stand der Technik, auch als Stabilisator-Additive für Kunststoffe, bekannt.

Unter Hydrotalciten versteht man schichtförmige Doppelhydroxide auf der Basis von Magnesium und Aluminium und der Summenformel Mg₆Al₂CO₃(OH)₁₆*4H₂O, die in der Natur vorkommen, aber auch synthetisch zugänglich sind. Im Rahmen der vorliegenden Erfindung sind jedoch Hydrotalcite zu verstehen, die unter die allgemeine Formel (I) fallen.

Zugänglich sind diese Strukturen beispielsweise gemäß DE 10 2006 055 214 A1. Diese calciumhaltigen Hydrotalcite (oder Calcium-carbonatohydroxodialuminate) wurden als Stabilisatoren/Säurefänger für PVC eingesetzt (CN 105 802 070 A, DE 10 2008 018 872 A1, DE 10 2007 037 795 A1, CN 101 284 953A).

In US 2017 174 865 A1 werden Calciumhydrotalcite mit zweibasigen Säuren modifiziert, die beim Einsatz in Polypropylen eine Säurefängerfunktion und Nukleierungsmittelfunktion erfüllen.

Das thermische Verhalten von Hydrotalciten ist beispielsweise in N.S. Puttaswamy et al., J. Mater. Chem. 1997, 7(9), 1941-1945 beschrieben.

Vorzugsweise steht in Formel (I) für M Calcium. Weiterhin ist bevorzugt, dass in Formel (I) Aⁿ⁻ für CO₃²⁻ steht.

Insbesondere ist bevorzugt, dass das Hydrotalcit eine Verbindung der Formel

Ca₄Al₂(OH)₁₂CO₃ * nH₂O;

Ca_{4,25}Al₂(OH)_{12,5}CO₃ * nH₂O;

Ca_{4,5}Al₂(OH)₁₃CO₃ * nH₂O;

Ca_{3,75}Al₂(OH)_{11,5}CO₃ * nH₂O;

Ca_{3,5}Al₂(OH)₁₁CO₃ * nH₂O;

Ca₄Al₂(OH)₁₂ (CO₃)_{0,75}(OH)_{0,5} * nH₂O

Ca₄Al₂(OH)₁₂ (CO₃)_{0,5}(OH) * nH₂O

oder

Ca₄Al₂(OH)₁₂ (CO₃)_{0,25}(OH)_{1,5} * nH₂O

ist, wobei n = 1 bis 5, ist.

Vorzugsweise liegt der Anteil an dem mindestens einen Treibmittel (a) im Bereich von 1 Gew.-% bis 34,9 Gew.-%, mehr bevorzugt 5 Gew.-% bis 30 Gew.-%, weiter mehr bevorzugt 10 Gew.-% bis 25 Gew.-%, weiter mehr bevorzugt 10 Gew.-% bis 20 Gew.-%, weiter mehr bevorzugt 12 Gew.-% bis 17 Gew.-%, beispielhaft 15 Gew.-%, jeweils bezogen auf die Gesamtmenge der Zusammensetzung.

Weiterhin enthält die erfindungsgemäße Zusammensetzung mindestens ein erstes (b) und ein zweites Polymer (c). Dementsprechend kann die Zusammensetzung auch weitere, wie ein drittes, viertes oder fünftes, Polymer enthalten. Es ist jedoch bevorzugt, dass die Zusammensetzung nur ein erstes und ein zweites Polymer enthält.

Bei dem ersten Polymer (b) handelt es sich um das Polymer, welches geschäumt werden soll. Dementsprechend können eine Reihe von Polymeren zum Einsatz kommen. Vorzugsweise handelt es sich bei dem ersten Polymer um ein thermoplastisches, duromeres oder elastomeres Polymer. Ein thermoplastisches Polymer kann aus einem einzigen thermoplastischen Polymer oder aus einem Gemisch thermoplastischer Polymere bestehen, vorzugsweise jedoch nur aus einem einzigen thermoplastischen Polymer. Gleiches gilt entsprechend für die duromeren und elastomeren Polymere.

Geeignete thermoplastische oder duromere Polymere sind insbesondere:
a) Polymeren aus Olefinen oder Diolefinen wie z.B. Polyethylen (LDPE, LLDPE, VLDPE, ULDPE, MDPE, HDPE, UHMWPE), Metallocen-PE (m-PE), Polypropylen, Polyisobutylen, Poly-4-methyl-penten-1, Polybutadien, Polyisopren, wie z.B. auch Naturkautschuk (NR), Polycycloocten, Polyalkylen-Kohlenmonoxid-Copolymere, sowie Copolymere in Form von statistischen oder Blockstrukturen wie z.B. Polypropylen-Polyethylen (EP), EPM oder EPDM mit z.B. 5-Ethyliden-2-Norbornen als Comonomer, Ethylen-Vinylacetat (EVA), Ethylen-Acrylester, wie z.B. Ethylen-Butylacrylat, Ethylen-Acrylsäure und deren Salze (lonomere), sowie Terpolymere wie z.B. Ethylen-Acrylsäure-Glycidyl(meth)acrylat, Pfropfpolymere wie z.B. Polypropylen-graft-Maleinsäureanhydrid, Polypropylen-graft-Acrylsäure, Polyethylen-graft-Acrylsäure, Polyethylen-Polybutylacrylat-graft-Maleinsäureanhydrid sowie Blends wie z.B. LDPE/LLDPE oder auch langkettenverzweigte Polypropylen-Copolymere die mit alpha-Olefinen als Comonomere hergestellt werden wie z.B. mit 1-Buten, 1-Hexen, 1-Octen oder 1-Octadecen
b) Polystyrol, Polymethylstyrol, Poly-alpha-methylstyrol, Polyvinylnaphthalin, Polyvinylbiphenyl, Polyvinyltoluol, Styrol-Butadien (SB), Styrol-Butadien-Styrol (SBS), Styrol-Ethylen-Butylen-Styrol (SEBS), Styrol-Ethylen-Propylen-Styrol, Styrol-Isopren, Styrol-Isopren-Styrol (SIS), Styrol-butadien-acrylnitril (ABS), Styrol-acrylnitril (SAN), Styrol-acrylnitril-acrylat (ASA), Styrol-Ethylen, Pfropfcopolymere aus Methylmethacrylat, Styrol-Butadien und ABS (MABS), sowie hydrierte Polystyrol-Derivate wie z.B. Polyvinylcyclohexan
c) halogenenthaltenden Polymeren wie z.B. Polyvinylchlorid (PVC), Polychloropren und Polyvinylidenchlorid (PVDC), Copolymere aus Vinylchlorid und Vinylidenchlorid oder aus Vinylchlorid und Vinylacetat, chloriertes Polyethylen, Polyvinylidenfluorid, Epichlorhydrin-Homo und Copolymere insbes. mit Ethylenoxid (ECO)
d) Polymeren von ungesättigten Estern wie z.B. Polyacrylate und Polymethacrylate wie Polymethylmethacrylat (PMMA), Polybutylacrylat, Polylaurylacrylat, Polystearylacrylat, Polyglycidylacrylat, Polyglycidylmethacrylat, Polyacrylnitril, Polyacrylamide, Copolymere wie z.B. Polyacrylnitril-Polyalkylacrylat,
e) Polymeren aus ungesättigten Alkoholen und Derivaten, wie z.B. Polyvinylalkohol, Polyvinylacetat, Polyvinylbutyral, Polyallylphthalat, Polyallylmelamin
f) Polyacetalen, wie z.B. Polyoxymethylen (POM) oder Copolymere mit z.B. Butanal,
g) Polyphenylenoxiden und Blends mit Polystyrol oder Polyamiden,
h) Polymeren von cyclischen Ethern wie z.B. Polyethylenglycol, Polypropylenglycol, Polyethylenoxid, Polypropylenoxid, Polytetrahydrofuran,
i) Polyurethanen, aus hydroxyterminierten Polyethern oder Polyestern und aromatischen oder aliphatischen Isocyanaten wie z.B. 2,4- oder 2,6 Toluylendiisocyanat oder Methylendiphenyldiisocyanat insbesondere auch lineare Polyurethane (TPU), Polyharnstoffen,
j) Polyamiden wie z.B. Polyamid-6, 6.6, 6.10, 4.6, 4.10, 6.12, 10.10, 10.12, 12.12, Polyamid 11, Polyamid 12 sowie (teil-)aromatische Polyamide wie z.B. Polyphthalamide, z.B. hergestellt aus Terephthalsäure und/oder Isophthalsäure und aliphatischen Diaminen wie z.B. Hexamethylendiamin oder m-Xylylendiamin oder aus aliphatischen Dicarbonsäuren wie z.B. Adipinsäure oder Sebazinsäure und aromatischen Diaminen wie z.B. 1,4- oder 1,3- Diaminobenzol, Blends von unterschiedlichen Polyamiden wie z.B. PA-6 und PA 6.6 bzw. Blends von Polyamiden und Polyolefinen wie z.B. PA/PP
k) Polyimiden, Polyamid-imiden, Polyetherimiden, Polyesterimiden, Poly-(ether)ketonen, Polysulfonen, Polyethersulfonen, Polyarylsulfonen, Polyphenylensulfiden, Polybenzimidazolen, Polyhydantoinen,
l) Polyestern aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterephthalat (PTT), Polyethylennaphthylat (PEN), Poly-1,4-dimethylolcyclohexanterephthalat, Polyhydroxybenzoat, Polyhydroxynaphthalat, Polymilchsäure (PLA), Polyhydroxybutyrat (PHB), Polyhydroxyvalerat (PHV), Polyethylensuccinat, Polytetramethylensuccinat, Polycaprolacton
m) Polycarbonaten, Polyestercarbonaten, sowie Blends wie z.B. PC/ABS, PC/PBT, PC/PET/PBT, PC/PA
n) Cellulosederivaten wie z.B. Cellulosenitrat, Celluloseacetat, Cellulosepropionat, Cellulosebutyrat,
o) Epoxidharzen, bestehend aus di- oder polyfunktionellen Epoxidverbindungen in Kombination mit z.B. Härtern auf der Basis von Aminen, Anhydriden, Dicyandiamid, Mercaptanen, Isocyanaten oder katalytisch wirkenden Härtern,
p) Phenolharzen wie z.B. Phenol-Formaldehyd-Harze, Harnstoff-Formaldehyd-Harze, Melamin-Formaldehydharze,
q) ungesättigten Polyesterharzen aus ungesättigten Dicarbonsäuren und Diolen mit Vinylverbindungen z.B. Styrol, Alkydharze,
r) Silikonen, z.B. auf der Basis von Dimethylsiloxanen, Methyl-Phenyl-siloxanen oder Diphenylsiloxanen z.B. Vinylgruppen terminiert
s) sowie Mischungen, Kombinationen oder Blends aus zwei oder mehr der zuvor genannten Polymere.

Besonders bevorzugte Polymere sind thermoplastische Polymere, Polyolefine, Polystyrol, PVC, Polymethylmethacrylate, Polyamide, Polyester und Polyetherimide, ganz besonders bevorzugt sind Polyolefine wie die erwähnten Polyethylene oder Polypropylene. Vorzugsweise beträgt der Anteil an dem ersten Polymer (b) 65 Gew.-% bis 98,9 Gew.-%, mehr bevorzugt 60 Gew.-% bis 94 Gew.-%, weiter mehr bevorzugt 67 Gew.-% bis 88 Gew.-%, weiter mehr bevorzugt 73 Gew.-% bis 87 Gew.-%, weiter mehr bevorzugt 77 Gew.-% bis 84 Gew.-%, beispielhaft 80 Gew.-%, jeweils bezogen auf die Gesamtmenge der Zusammensetzung.

Neben dem ersten Polymer enthält die erfindungsgemäße Zusammensetzung zumindest ein zweites Polymer. Ohne an eine Theorie gebunden zu sein, dient das zweite Polymer als Aktivator, der die Schaumbildung unterstützt.

Es können ein oder mehrere Aktivatoren in der erfindungsgemäßen Zusammensetzung enthalten sein. Sofern nur ein Aktivator enthalten ist, handelt es sich um ein Säureanhydrid-Homopolymer oder ein Copolymer aus mindestens einem Säureanhydrid-Monomer und mindestens einem weiteren Monomer, wobei das Säureanhydrid als Monomereneinheit im zweiten Polymer nicht durch Aufpropfen eingeführt ist. Sofern mehrere Aktivatoren vorhanden sind, also beispielsweise zwei, drei oder vier, muss mindestens ein Aktivator ein Säureanhydrid-Homopolymer oder ein Copolymer aus mindestens einem Säureanhydrid-Monomer und mindestens einem weiteren Monomer sein, wobei das Säureanhydrid als Monomereneinheit im zweiten Polymer nicht durch Aufpropfen eingeführt ist. Es können jedoch auch mehrere dieser Polymere als Aktivatoren dienen.

Demzufolge handelt es sich bei dem zweiten Polymer um ein Polymer, das zu dem ersten Polymer unterschiedlich ist. Das zweite Polymer kann ein Homopolymer aus einem Säureanhydrid sein. Im Rahmen der vorliegenden Erfindung umfasst in diesem speziellen Zusammenhang der Begriff "Säureanhydrid-Homopolymer" alle Polymere, die ausschließlich aus Säureanhydrid-Monomeren aufgebaut sind, auch wenn die Monomeren unterschiedlich sind. Vorzugsweise handelt es sich jedoch um ein Homopolymer aus nur einem einzigen Säureanhydrid-Monomer. Weiterhin kann das zweite Polymer ein Copolymer aus mindestens einem Säureanhydrid-Monomer und mindestens einem weiteren Monomer sein, was bevorzugt ist. Hierbei handelt es sich bei dem mindestens einen weiteren Monomer nicht um ein Säureanhydrid-Monomer. Es können somit ein, zwei, drei oder mehr Säureanhydrid-Monomere und ein, zwei, drei oder mehr weitere Monomere das zweite Polymer bilden. Vorzugsweise wird das zweite Polymer nur aus einem Säureanhydrid-Monomer und einem weiteren Monomer gebildet. Weiterhin sind Copolymere bevorzugt. Überraschenderweise hat sich ergeben, dass das Säureanhydrid als Monomereneinheit im mindestens zweiten Polymer auftritt und nicht durch Aufpfropfen an eine andere Monomereneinheit in das mindestens zweite Polymer eingeführt ist, um einen ausreichenden Effekt zu erzielen. Die Monomeren weisen im Copolymer vorzugsweise keine blockweise Anordnung auf. Diese können vorzugsweise statistisch oder alternierend, insbesondere alternierend, angeordnet sein.

Vorzugsweise handelt es sich bei dem zweiten Polymer um ein Carbonsäureanhydrid-Homopolymer oder ein Copolymer aus mindestens einem Carbonsäureanhydrid-Monomer und mindestens einem weiteren Monomer, vorzugsweise ein Copolymer aus einem Carbonsäureanhydrid-Monomer und einem weiteren Monomer, wobei das Säureanhydrid als Monomereneinheit im zweiten Polymer nicht durch Aufpropfen eingeführt ist. Hierbei gelten die obigen allgemeinen Ausführungen für Säureanhydride und andere Monomere.

Vorzugsweise ist das Carbonsäureanhydrid-Monomer Maleisäureanhydrid.

Vorzugsweise stellt das mindestens eine weitere Monomer einen Kohlenwasserstoff dar, der 2 bis 30 Kohlenstoffatome, vorzugsweise 2 bis 20 Kohlenstoffatome, aufweist und mindestens eine ethylenisch ungesättigte Doppelbindung enthält; vorzugsweise ist das weitere Monomer Ethen, Styren oder Octadecen.

Geeignete Aktivator-Polymere (zweites Polymer) sind beispielsweise:
Poly(styrol-co-maleinsäureanhydrid), Poly(ethylen-co-maleinsäureanhydrid), Poly(ethylen-coalkylacrylat-co-maleinsäureanhydrid). Besonders bevorzugt sind Poly(styrol-comaleinsäureanhydrid), Poly(ethylen-co-maleinsäureanhydrid) und Poly(alkylen-comaleinsäureanhydrid) wie z.B. Poly(octen-co-maleinsäureanhydrid), Poly(dodecen-comaleinsäureanhydrid) und Poly(octadecen-co-maleinsäureanhydrid). Insbesondere sind Polyethylen-Maleinsäureanhydrid-Copolymere und Polypropylen-Maleinsäureanhydrid-Copolymer bevorzugt.

Vorzugsweise beträgt der Säureanhydridgehalt im mindestens zweiten Polymer von 5 Gew.-% bis 95 Gew.-%, vorzugsweise von 10 Gew.-% bis 90 Gew.-%, weiter bevorzugt von 15 Gew.-% bis 85 Gew.-%, weiter bevorzugt von 20 Gew.-% bis 80 Gew.-%, jeweils bezogen auf alle Monomere im Polymer.

Vorzugsweise beträgt das zahlengemittelte Molekulargewicht des mindestens zweiten Polymers 1000 g/mol bis 100000 g/mol, mehr bevorzugt 5000 g/mol bis 80000 g/mol, mehr bevorzugt 10000 g/mol bis 70000 g/mol und weiter mehr bevorzugt von 15000 g/mol bis 60000 g/mol.

Vorzugsweise beträgt der Anteil an dem zweiten Polymer (c) 0,1 Gew.-% bis 19 Gew.-%, mehr bevorzugt 1 Gew.-% bis 10 Gew.-%, weiter mehr bevorzugt 2 Gew.-% bis 8 Gew.-%, weiter mehr bevorzugt 3 Gew.-% bis 7 Gew.-%, weiter mehr bevorzugt 4 Gew.-% bis 6 Gew.-%, beispielhaft 5 Gew.-%, jeweils bezogen auf die Gesamtmenge der Zusammensetzung.

Zusätzlich kann die erfindungsgemäße Zusammensetzung Zusatzstoffe enthalten. Beispiele sind ausgewählt aus der Gruppe bestehend aus primären Antioxidantien, sekundären Antioxidantien, UV-Absorber, der Lichtstabilisatoren, der Metalldesaktivatoren, der Füllstoffdesaktivatoren, der Antiozonantien, Nukleierungsmittel, Antinukleierungsmittel, Schlagzähigkeitsverbesserer, Weichmacher, Gleitmittel, Rheologiemodifikatoren, Thixotropiemittel, Kettenverlängerer, Verarbeitungshilfsmittel, Entformungshilfsmittel, Flammschutzmittel, Pigmente, Farbstoffe, optische Aufheller, antimikrobielle Wirkstoffe, Antistatika, Slipmittel, Antiblockmittel, Kopplungsmittel, Vernetzungsmittel, Antivernetzungsmittel, Hydrophilisierungsmittel, Hydrophobierungsmittel, Haftvermittler, Dispergiermittel, Kompatibilisatoren, Sauerstofffänger, Säurefänger, Abbau-Additiv, Geruchsfänger, Markierungsmittel, Antifoggingmittel, Füllstoffe und Verstärkungsstoffe.

In bevorzugter Ausführungsform enthalten die Zusammensetzungen insbesondere zusätzlich Nukleierungsmittel wie z.B. Ruß, Graphit, Carbonnanotubes (CNTs), Graphen, Silica, Talc, Schichtsilikate wie z.B. Nanoclays, Zeolite, Nanofasern, PTFE oder Calciumcarbonat

Das erfindungsgemäße Verfahren erfolgt bei einer Temperatur, die geeignet ist, die eine Abspaltung von Wasser aus dem mindestens einen Treibmittel zur Schaumbildung ermöglicht. Diese ist abhängig vom Treibmittel (a) und kann vom zuständigen Fachmann in geeigneter Weise ermittelt werden, in dem das thermische Verhalten des mindestens einen Treibmittels sowie der Polymere (a) und (b) untersucht wird, sofern dieses nicht bereits in der Literatur beschrieben ist. Vorzugsweise liegt die Temperatur im Bereich von 160°C bis 300°C, mehr bevorzugt bei 165°C bis 280°C, weiter mehr bevorzugt bei 170°C bis 260°C, weiter mehr bevorzugt bei 175°C bis 250°C, weiter mehr bevorzugt bei 180°C bis 240°C, weiter mehr bevorzugt bei 185°C bis 230°C, weiter mehr bevorzugt bei 190°C bis 220°C, weiter mehr bevorzugt bei 195°C bis 210°C, beispielhaft bei 200°C.

Vorteilhaft erfolgt das erfindungsgemäße Verfahren in einem Extruder. In einer weiter bevorzugten Ausführungsform des erfindungsgemäßen Verfahrens erfolgt dieses durch Schaumextrusion, in dem die das Treibmittel (a) enthaltende Zusammensetzung mit den Polymeren (b) und (c) aufgeschmolzen wird.

Grundsätzlich kann die Schaumherstellung mittels des erfindungsgemäßen Verfahrens jedoch in jeder beheizbaren Apparatur stattfinden, die es erlaubt, eine Kunststoffschmelze und eine Temperatur zu erhalten, die zu einer Wasserabspaltung aus den zugegebenen Treibmittel (a) und damit zur Schaumbildung führt. Übliche Verfahren zur Herstellung von Schäumen sind Formpressverfahren ("compression-moulded foams"), Schaumgussverfahren, Extrusionsverfahren, Spritzgussverfahren, Festphaseverfahren und Partikelschäumverfahren. Das jeweilige Verfahren wird nach den herzustellenden Teilen, dem Kunststoff und den zu erreichenden Schaumeigenschaften wie z.B. der Schaumdichte, der Zellstruktur und der mechanischen Eigenschaften ausgewählt. Die Produktion kann dabei batchweise, z.B. bei Spritzgussverfahren oder kontinuierlich, z.B. bei Extrusionsverfahren erfolgen.

Im erfindungsgemäßen Verfahren sind Extrusionsverfahren und Spritzgussverfahren, insbesondere das Extrusionsverfahren, bevorzugt. Bei dem Extrusionsverfahren wird eine Polymerschmelze in einem Extruder zusammen mit dem schaumbildenden Additiv aufgeschmolzen und homogenisiert. Die das entstehende Gas enthaltene Polymerschmelze erfährt an der Extruderdüse eine Druckerniedrigung ("Entspannung"), die Löslichkeit des Gases nimmt ab und das Gas entweicht. Gleichzeitig kühlt die Schmelze ab, die Schmelzviskosität steigt an und es entsteht die gewünschte Schaumstruktur. Der Prozess des Extrusionsschäumens wird vor allem zur Herstellung von geschäumten Platten, Folien, Blöcken, Rohren und Profilen eingesetzt.

Bei den Spritzgussverfahren wird das Polymer, das das schaumbildende Additiv enthält, direkt in der Spritzgussform aufgeschäumt, die Form wird dazu in der Regel nur anteilig gefüllt. Die Teile weisen außer einem reduzierten Gewicht ("Leichtbau"), vorteilhafterweise einen geringen Verzug, keine Einfallstellen und eine exzellente Oberfläche auf. In Abhängigkeit vom Einspritzdruck und dem Temperaturprofil bei der Verarbeitung kann das entstehende Gas einen überkritischen Zustand aufweisen und damit zu einer Erniedrigung der Schmelzviskosität des Polymeren führen. Das entstehende Gas wirkt somit zusätzlich als Verarbeitungshilfsmittel. Reduzierte Zykluszeiten bei der Teileherstellung sind ein daraus resultierender Vorteil. Das Verfahren kann sowohl in einem Ein- oder Mehrkomponentenprozess oder mittels in der Spritzgussform eingelegter Teile oder Folien ausgeführt werden.

### Beispiele

### Materialien

### Erstes Polymer:

LLDPE: Sabic LLDPE 6318BE von Sabic

### Calciumhydrotalcit:

ACTILOX^{®} CAHC von Nabaltec AG
Calcium-Aluminium-Hydroxy-Carbonate
Ca₄Al₂(OH)₁₂CO₃ · nH₂O n = 4-5

### Zweites Polymer (Aktivator):

Vergleichspolymer: Poly(ethylen-co-butylacrylat)-graft-Maleinsäureanhydrid: Scona TSEB 2113 GB von BYK Additives & Instruments (Maleinsäureanhydridanteil 0,6 Gew.-%)
Vergleichspolymer: Poly(ethylen)-graft-Maleinsäureanhydrid: Fusabond E226 von Dupont^{™} (Maleinsäureanhydridanteil 1 Gew.-%)
Polymaleinsäureanhydrid-co-styrol von Sigma-Aldrich ; (Mn 19.000 g/mol) (Maleinsäureanhydridanteil 25 Gew.-%)
Polymaleinsäureanhydrid-alt-1-octadecen von Sigma-Aldrich (Mn 30.000-50.000 g/mol) (Maleinsäureanhydridanteil 28 Gew.-%)
Polymaleinsäureanhydrid-alt-ethylen: ZeMac E60-P von Vertellus (Mn 27.000 g/mol) (Maleinsäureanhydridanteil 78 Gew.-%)
Vergleichspolymer: Polyacyrlsäure-co-ethylen von Sigma-Aldrich (Maleinsäureanhydridanteil 20 Gew.-%)

### Durchführung

Das Extrusionsschäumen mit LLDPE (linear low density polyethylene, Sabic LLDPE 6318BE) erfolgt bei einer Temperatur von 200°C und einer Schneckendrehzahl von 150 U/min auf einem 11 mm Doppelschneckenextruder (Process 11 von Thermo Scientific) mit Breitschlitzdüse. Das gewünschte Verhältnis aus Polymer (b), Polymer (c) und Treibmittel (a) wird zunächst durch Mischen homogenisiert und über eine volumetrische Dosierung der Extrusion zugeführt.

### Ergebnisse

Hierbei zeigten sich folgende Ergebnisse:

| Beispiel | Zusammensetzung | Dichte | Zelllänge in Extrusionsrichtung | Zellanzahl <10 µm (aus 50 Zellen) | Zellanzahl <50 µm (aus 50 Zellen) |
|---|---|---|---|---|---|
| V1 | 15% Calciumhydrotalcit | 0,97 g/cm³ | 100 µm | 0 | 34 |
| 2 | 15% Calciumhydrotalcit und 2,5% Poly(maleinsäureanhydridalt-ethylen) | 0,87 g/cm³ | 30 µm | 6 | 41 |
| 3 | 15% Calciumhydrotalcit und 5% Poly(maleinsäureanhydrid-alt-ethylen) | 0,78 g/cm³ | 40 µm | 10 | 38 |
| 4 | 15% Calciumhydrotalcit und 2,5% Poly(maleinsäureanhydrid-co-styrol) | 0,82 g/cm³ | 80 µm | 2 | 22 |
| 5 | 15% Calciumhydrotalcit und 5% Poly(maleinsäureanhydrid-co-styrol) | 0,64 g/cm³ | 25 µm | 14 | 44 |
| 6 | 15% Calciumhydrotalcit und 5% Poly(maleinsäureanhydrid-alt-1-octadecen) | 0,86 g/cm³ | 50 µm | 3 | 29 |
| 7 | 10% Calciumhydrotalcit und 5% Poly(maleinsäureanhydridalt-1-octadecen) | 0,71 g/cm³ | 30 µm | 6 | 43 |
| V8 | 15% Calciumhydrotalcit und 5% Poly(acyrlsäure-co-ethylen) | 0,95 g/cm³ | 50 µm | 4 | 34 |
| V9 | 15% Calciumhydrotalcit und 5% Poly(ethylen-co-butylacrylat)-graft-Maleinsäureanhydrid | 0,97 g/cm³ | 60 µm | 12 | 33 |
| V10 | 15% Calciumhydrotalcit und 5% Poly(ethylen)-graft-Maleinsäureanhydrid | 0,98 g/cm³ | 80 µm | 7 | 30 |
| V11 | 5% Poly(maleinsäureanhydrid-co-styrol) | 0,94 g/cm³ | Keine Zellen | Keine Zellen | Keine Zellen |

Es zeigt sich, dass die mit der Schaumbildung einhergehende Verringerung der Dichte in signifikanter Weise (< 0,9 g/cm³) nur mit einer Kombination aus Treibmittel (a) und zweitem Polymer (c) für Polymer (b) möglich ist. Dies kann nicht erreicht werden, wenn nur Treibmittel (a) (Vergleichsversuch V1) oder Polymer (c) (Vergleichsversuch V11) eingesetzt wird. Überraschenderweise kann keine signifikante Dichtereduzierung erreicht werden, wenn alternativ zu dem Säureanhydrid eine Säure als Monomer (Vergleichsversuch V8) oder alternativ zu dem Polymer (c) ein gepfropftes Polymer (Vergleichsversuche V9 und V10) eingesetzt wird.

Weiterhin wurde der Einfluss der Anteile in der erfindungsgemäßen Zusammensetzung untersucht.

| | 15% Calciumhydrotalcit + Poly(maleinsäureanhydrid-alt-ethylen) | 15% Calciumhydrotalcit + Poly(maleinsäureanhydrid-co-styrol) | 15% Calciumhydrotalcit + Poly(maleinsäureanhydrid-alt-1-octadecen) |
|---|---|---|---|
| Menge Aktivator in % | Dichte in g/cm³ | | |
| 0 | 0,97 | 0,97 | 0,97 |
| 2,5 | 0,87 | 0,82 | |
| 5,0 | 0,78 | 0,64 | 0,86 |

| | 5% Poly(maleinsäureanhydrid-alt-ethylen) + Calciumhydrotalcit | 5% Poly(maleinsäureanhydrid-co-styrol) + Calciumhydrotalcit | 5% Poly(maleinsäureanhydrid-alt-1-octadecen) + Calciumhydrotalcit |
|---|---|---|---|
| Menge Calciumhydrotalcit in % | Dichte in g/cm³ | | |
| 0 | | 0,94 | |
| 5 | 0,87 | 0,84 | 0,80 |
| 10 | 0,93 | 0,66 | 0,71 |
| 15 | 0,78 | 0,64 | 0,86 |
| 20 | 0,83 | 0,69 | 0,90 |

Es zeigen sich sehr gute Resultate bei einer Menge von 5 Gew.-% Treibmittel (a) und 15 Gew.-% Polymer (c) bei 80 Gew.-% Polymer (b).

## Patentansprüche

1. Verfahren zum Herstellen eines Polymerschaumes den Schritt enthaltend
- Erhitzen einer Zusammensetzung enthaltend mindestens ein Treibmittel, mindestens ein erstes Polymer und mindestens ein zweites Polymer auf eine Temperatur, die eine Abspaltung von Wasser aus dem mindestens einen Treibmittel zur Schaumbildung ermöglicht,
wobei das mindestens eine Treibmittel ein Hydrotalcit der allgemeinen Formel (I)
M²⁺₁₋ₓAlₓ(OH)₂ (Aⁿ⁻)_{x/n} * d H₂O (I)
ist und wobei M²⁺ als Kation eines oder mehrere der Metalle aus der Gruppe Mg, Ca, Sr, Zn oder Sn, 0 < x < 0,5, d eine Zahl von < 0 bis 20, Aⁿ ein Anion ausgewählt aus OH⁻, ClO₄⁻, HCO₃⁻, CH₃COO⁻, C₆H₅COO⁻, CO₃²⁻, (CHOHCOO)₂²⁻, (CH₂COO)₂²⁻, CH₃CHOHCOO⁻, HPO₃⁻ oder HPO₄²⁻ und n die Ladung des Anions ist und
wobei das mindestens zweite Polymer verschieden von dem ersten Polymer ist, das mindestens zweite Polymer die Schaumbildung unterstützt und ein Säureanhydrid-Homopolymer oder ein Copolymer aus mindestens einem Säureanhydrid-Monomer und mindestens einem weiteren Monomer ist, wobei das Säureanhydrid als Monomereneinheit im zweiten Polymer nicht durch Aufpropfen eingeführt ist.

2. Verfahren nach Anspruch 1, **dadurch gekennzeichnet, dass** in Formel (I) für M Calcium steht.

3. Verfahren nach Anspruch 1 oder 2, **dadurch gekennzeichnet, dass** in Formel (I) Aⁿ⁻für CO₃²⁻ steht.

4. Verfahren nach einem der Ansprüche 1 bis 3, **dadurch gekennzeichnet, dass** das Hydrotalcit eine Verbindung der Formel
Ca₄Al₂(OH)₁₂CO₃ * nH₂O;
Ca_{4,25}Al₂(OH)_{12,5}CO₃ * nH₂O;
Ca_{4,5}Al₂(OH)₁₃CO₃ * nH₂O;
Ca_{3,75}Al₂(OH)_{11,5}CO₃ * nH₂O;
Ca_{3,5}Al₂(OH)₁₁CO₃ * nH₂O;
Ca₄Al₂(OH)₁₂ (CO₃)_{0,75}(OH)_{0,5} * nH₂O
Ca₄Al₂(OH)₁₂ (CO₃)_{6,5}(OH) * nH₂O
oder
Ca₄Al₂(OH)₁₂ (CO₃)_{0,25}(OH)_{1,5} * nH₂O
ist, wobei n = 1 bis 5.

5. Verfahren nach einem der Ansprüche 1 bis 4, **dadurch gekennzeichnet, dass** nur ein Treibmittel in der Zusammensetzung vorhanden ist.

6. Verfahren nach einem der Ansprüche 1 bis 5, **dadurch gekennzeichnet, dass** das erste Polymer ein thermoplastisches, duromeres oder elastomeres Polymer ist.

7. Verfahren nach einem der Ansprüche 1 bis 6, **dadurch gekennzeichnet, dass** die Temperatur im Bereich von 160°C bis 300°C liegt.

8. Verfahren nach einem der Ansprüche 1 bis 7, **dadurch gekennzeichnet, dass** der Anteil an dem mindestens einen Treibmittel im Bereich von 1 Gew.-% bis 34,9 Gew.-% bezogen auf die Gesamtmenge der Zusammensetzung liegt.

9. Verfahren nach einem der Ansprüche 1 bis 8, **dadurch gekennzeichnet, dass** der Anteil an dem ersten Polymer im Bereich von 65 Gew.-% bis 98,9 Gew.-% bezogen auf die Gesamtmenge der Zusammensetzung liegt.

10. Verfahren nach einem der Ansprüche 1 bis 9, **dadurch gekennzeichnet, dass** das zweite Polymer ein Carbonsäureanhydrid-Homopolymer oder ein Copolymer aus mindestens einem Carbonsäureanhydrid-Monomer und mindestens einem weiteren Monomer, vorzugsweise ein Copolymer aus einem Carbonsäureanhydrid-Monomer und einem weiteren Monomer, ist.

11. Verfahren nach Anspruch 10, **dadurch gekennzeichnet, dass** das Carbonsäureanhydrid-Monomer Maleisäureanhydrid ist.

12. Verfahren nach einem der Ansprüche 1 bis 11, **dadurch gekennzeichnet, dass** das mindestens eine weitere Monomer einen Kohlenwasserstoff darstellt, der 2 bis 30 Kohlenstoffatome aufweist und mindestens eine ethylenisch ungesättigte Doppelbindung enthält, vorzugsweise ist das weitere Monomer Ethen, Styren oder Octadecen.

13. Verfahren nach einem der Ansprüche 1 bis 12, **dadurch gekennzeichnet, dass** das zweite Polymer einen Anteil im Bereich von 0,1 Gew.-% bis 19 Gew.-% bezogen auf die Gesamtmenge der Zusammensetzung aufweist.

14. Verfahren nach einem der Ansprüche 1 bis 13, **dadurch gekennzeichnet, dass** das Verfahren in einem Extruder durchgeführt wird.

15. Polymerschaum erhältlich durch ein Verfahren nach einem der Ansprüche 1 bis 14.

16. Verwendung eines Hydrotalcits wie in einem der Ansprüche 1 bis 4 angegeben als Treibmittel zur Herstellung eines Polymerschaumes.

17. Zusammensetzung enthaltend mindestens ein Treibmittel, mindestens ein erstes Polymer und mindestens ein zweites Polymer,
wobei das mindestens eine Treibmittel ein Hydrotalcit der allgemeinen Formel (I)
M²⁺₁₋ₓAlₓ(OH)₂ (Aⁿ⁻)_{x/n} * d H₂O (I)
ist und wobei M²⁺ als Kation eines oder mehrere der Metalle aus der Gruppe Mg, Ca, Sr, Zn oder Sn, 0 < x < 0,5, d eine Zahl von < 0 bis 20, Aⁿ ein Anion ausgewählt aus OH⁻, CIO₄⁻, HCO₃⁻, CH₃COO⁻, C₆H₅COO⁻, CO₃²⁻, (CHOHCOO)₂²⁻ , (CH₂COO)₂²⁻, CH₃CHOHCOO⁻, HPO₃⁻ oder HPO₄²⁻ und n die Ladung des Anions ist und
wobei das mindestens zweite Polymer verschieden von dem ersten Polymer ist, das mindestens zweite Polymer die Schaumbildung unterstützt und ein Säureanhydrid-Homopolymer ist oder ein Copolymer aus mindestens einem Säureanhydrid-Monomer und mindestens einem weiteren Monomer ist, wobei das Säureanhydrid als Monomereneinheit im zweiten Polymer nicht durch Aufpfropfen eingeführt ist.

## Claims

1. Process for producing a polymer foam, including the step of
- heating a composition comprising at least one blowing agent, at least one first polymer and at least one second polymer to a temperature which enables elimination of water from the at least one blowing agent, for the formation of foam,
where the at least one blowing agent is a hydrotalcite of the general formula (I)
M²⁺₁₋ₓAlₓ(OH)₂ (Aⁿ⁻)_{x/n} * d H₂O (I)
and where M²⁺ as cation is one or more of the metals from the group Mg, Ca, Sr, Zn or Sn, 0 < x < 0.5, d is a number from < 0 to 20, Aⁿ is an anion selected from OH⁻, ClO₄⁻, HCO₃⁻, CH₃COO⁻, C₆H₅COO⁻, CO₃²⁻, (CHOHCOO)₂²⁻, (CH₂COO)₂²⁻, CH₃CHOHCOO⁻, HPO₃⁻ or HPO₄²⁻, and n is the charge of the anion, and
where the at least second polymer is different from the first polymer, the at least second polymer supports the formation of foam and is an acid anhydride homopolymer or a copolymer of at least one acid anhydride monomer and at least one further monomer, where the acid anhydride as a monomer unit in the second polymer is not introduced by grafting.

2. Process according to Claim 1, **characterized in that** M in formula (I) is calcium.

3. Process according to Claim 1 or 2, **characterized in that** Aⁿ⁻ in formula (I) is CO₃²⁻.

4. Process according to any of Claims 1 to 3, **characterized in that** the hydrotalcite is a compound of the formula
Ca₄Al₂(OH)₁₂CO₃ * nH₂O;
Ca_{4.25}Al₂(OH)_{12.5}CO₃* nH₂O;
Ca_{4.5}Al₂(OH)₁₃CO₃* nH₂O;
Ca_{3.75}Al₂(OH)_{11.5}CO₃ * nH₂O;
Ca_{3.5}Al₂(OH)₁₁CO₃ * nH₂O;
Ca₄Al₂(OH)₁₂ (CO₃)_{0.75}(OH)_{0.5} * nH₂O
Ca₄Al₂(OH)₁₂ (CO₃)_{0.5}(OH) * nH₂O
or
Ca₄Al₂(OH)₁₂ (CO₃)_{0.25}(OH)_{1.5} * nH₂O,
where n = 1 to 5.

5. Process according to any of Claims 1 to 4, **characterized in that** only one blowing agent is present in the composition.

6. Process according to any of Claims 1 to 5, **characterized in that** the first polymer is a thermoplastic, thermoset or elastomeric polymer.

7. Process according to any of Claims 1 to 6, **characterized in that** the temperature is in the range from 160°C to 300°C.

8. Process according to any of Claims 1 to 7, **characterized in that** the fraction of the at least one blowing agent is in the range from 1 wt% to 34.9 wt%, based on the total amount of the composition.

9. Process according to any of Claims 1 to 8, **characterized in that** the fraction of the first polymer is in the range from 65 wt% to 98.9 wt%, based on the total amount of the composition.

10. Process according to any of Claims 1 to 9, **characterized in that** the second polymer is a carboxylic anhydride homopolymer or a copolymer of at least one carboxylic anhydride monomer and at least one further monomer, preferably a copolymer of a carboxylic anhydride monomer and a further monomer.

11. Process according to Claim 10, **characterized in that** the carboxylic anhydride monomer is maleic anhydride.

12. Process according to any of Claims 1 to 11, **characterized in that** the at least one further monomer is a hydrocarbon which has 2 to 30 carbon atoms and contains at least one ethylenically unsaturated double bond, the further monomer preferably being ethene, styrene or octadecene.

13. Process according to any of Claims 1 to 12, **characterized in that** the second polymer has a fraction in the range from 0.1 wt% to 19 wt%, based on the total amount of the composition.

14. Process according to any of Claims 1 to 13, **characterized in that** the process is carried out in an extruder.

15. Polymer foam obtainable by a process according to any of Claims 1 to 14.

16. Use of a hydrotalcite as specified in any of Claims 1 to 4 as a blowing agent for producing a polymer foam.

17. Composition comprising at least one blowing agent, at least one first polymer and at least one second polymer,
where the at least one blowing agent is a hydrotalcite of the general formula (I)
M²⁺₁₋ₓAlₓ(OH)₂ (Aⁿ⁻)_{x/n} * d H₂O (I)
and where M²⁺ as cation is one or more of the metals from the group Mg, Ca, Sr, Zn or Sn, 0 < x < 0.5, d is a number from < 0 to 20, Aⁿ is an anion selected from OH⁻, ClO₄⁻, HCO₃⁻, CH₃COO⁻, C₆H₅COO⁻, CO₃²⁻, (CHOHCOO)₂²⁻, (CH₂COO)₂²⁻, CH₃CHOHCOO⁻, HPO₃⁻ or HPO₄²⁻, and n is the charge of the anion, and
where the at least second polymer is different from the first polymer, the at least second polymer supports the formation of foam and is an acid anhydride homopolymer or is a copolymer of at least one acid anhydride monomer and at least one further monomer, where the acid anhydride as a monomer unit in the second polymer is not introduced by grafting.

## Revendications

1. Procédé de fabrication d'une mousse polymère, contenant l'étape suivante :
- chauffage d'une composition contenant au moins un agent gonflant, au moins un premier polymère et au moins un second polymère à une température qui permet une élimination d'eau à partir de l'au moins un agent gonflant, dans le but de former une mousse,
- l'au moins un agent gonflant étant une hydrotalcite de formule générale (I)
M²⁺₁₋ₓAlₓ(OH)₂(Aⁿ⁻)_{x/n}•d H₂O (I)
et M²⁺ étant un cation d'un ou plusieurs des métaux du groupe Mg, Ca, Sr, Zn ou Sn, 0 < x < 0,5, d étant un nombre < 0 à 20, Aⁿ étant un anion choisi parmi OH⁻, ClO₄⁻, HCO₃⁻, CH₃COO⁻, C₆H₅COO⁻, CO₃²⁻, (CHOHCOO)₂²⁻, (CH₂COO)₂²⁻, CH₃CHOHCOO⁻, HPO₃⁻ ou HPO₄²⁻et n représentant la charge de l'anion et
l'au moins second polymère étant différent du premier polymère, l'au moins second polymère facilitant la formation de mousse et étant un homopolymère d'anhydride d'acide ou un copolymère d'au moins un monomère d'anhydride d'acide et d'au moins un autre monomère, l'anhydride d'acide, en tant que motif monomère, n'étant pas introduit par greffage dans le second polymère.

2. Procédé selon la revendication 1, **caractérisé en ce que**, dans la formule (I), M représente le calcium.

3. Procédé selon la revendication 1 ou 2, **caractérisé en ce que**, dans la formule (I), Aⁿ⁻ représente CO₃²⁻.

4. Procédé selon l'une des revendications 1 à 3, **caractérisé en ce que** l'hydrotalcite est un composé de formule
Ca₄Al₂(OH)₁₂CO₃•nH₂O ;
Ca_{4,25}Al₂(OH)_{12,5}CO₃•nH₂O ;
Ca_{4,5}Al₂(OH)₁₃CO₃•nH₂O ;
Ca_{3,75}Al₂(OH)_{11,5}CO₃•nH₂O ;
Ca_{3,5}Al₂(OH)₁₁CO₃•nH₂O ;
Ca₄Al₂(OH)₁₂(CO₃)_{0,75}(OH)_{0,5}•nH₂O ;
Ca₄Al₂(OH)₁₂(CO₃)_{0,5}(OH)•nH₂O
ou
Ca₄Al₂(OH)₁₂(CO₃)_{0,25}(OH)₁,₅•nH₂O,
dans lesquelles n = 1 à 5.

5. Procédé selon l'une des revendications 1 à 4, **caractérisé en ce qu'**un seul agent gonflant est présent dans la composition.

6. Procédé selon l'une des revendications 1 à 5, **caractérisé en ce que** le premier polymère est un polymère thermoplastique, thermodurcissable ou élastomère.

7. Procédé selon l'une des revendications 1 à 6, **caractérisé en ce que** la température est comprise dans la plage de 160 °C à 300 °C.

8. Procédé selon l'une des revendications 1 à 7, **caractérisé en ce que** la proportion de l'au moins un agent gonflant est, par rapport à la quantité totale de la composition, comprise dans la plage de 1 % en poids à 34,9 % en poids.

9. Procédé selon l'une des revendications 1 à 8, **caractérisé en ce que** la proportion du premier polymère, par rapport à la quantité totale de la composition, est comprise dans la plage de 65 % en poids à 98,9 % en poids.

10. Procédé selon l'une des revendications 1 à 9, **caractérisé en ce que** le second polymère est un homopolymère d'anhydride carboxylique ou un copolymère d'au moins un monomère d'anhydride carboxylique et d'au moins un autre monomère, de préférence un copolymère d'un monomère d'anhydride carboxylique et d'un autre monomère.

11. Procédé selon la revendication 10, **caractérisé en ce que** le monomère d'anhydride carboxylique est l'anhydride maléique.

12. Procédé selon l'une des revendications 1 à 11, **caractérisé en ce que** l'au moins un autre monomère représente un hydrocarbure qui comprend 2 à 30 atomes de carbone et contient au moins une double liaison à insaturation éthylénique, l'autre monomère étant de préférence l'éthène, le styrène ou l'octadécène.

13. Procédé selon l'une des revendications 1 à 12, **caractérisé en ce que** le second polymère présente une proportion, par rapport à la quantité totale de la composition, comprise dans la plage de 0,1 % en poids à 19 % en poids.

14. Procédé selon l'une des revendications 1 à 13, **caractérisé en ce que** le procédé est mis en œuvre dans une extrudeuse.

15. Mousse polymère pouvant être obtenue par un procédé selon l'une des revendications 1 à 14.

16. Utilisation d'une hydrotalcite telle qu'indiquée dans l'une des revendications 1 à 4 en tant qu'agent gonflant pour la fabrication d'une mousse polymère.

17. Composition contenant au moins un agent gonflant, au moins un premier polymère et au moins un second polymère,
l'au moins un agent gonflant étant une hydrotalcite de formule générale (I)
M²⁺₁₋ₓAlₓ(OH)₂(Aⁿ⁻)_{x/n}•d H₂O (I)
et M²⁺ étant un cation d'un ou plusieurs des métaux du groupe Mg, Ca, Sr, Zn ou Sn, 0 < x < 0,5, d étant un nombre < 0 à 20, Aⁿ étant un anion choisi parmi OH⁻, ClO₄⁻, HCO₃⁻, CH₃COO⁻, C₆H₅COO⁻, CO₃²⁻, (CHOHCOO)₂²⁻, (CH₂COO)₂²⁻, CH₃CHOHCOO⁻, HPO₃⁻ ou HPO₄²⁻, et n représentant la charge de l'anion et
l'au moins second polymère étant différent du premier polymère, l'au moins second polymère facilitant la formation de mousse et étant un homopolymère anhydride d'acide ou un homopolymère d'au moins un monomère d'anhydride d'acide d'au moins un autre monomère, l'anhydride d'acide, en tant que motif monomère, n'étant pas introduit par greffage dans le second polymère.
